(19) Europäisches Patentamt
European Patent Office
Office européen des brevets

(11) Publication number: 0 117 433 A1

(12) # EUROPEAN PATENT APPLICATION

(21) Application number: 84100771.9

(22) Date of filing: 25.01.84

(51) Int. Cl.³: C 08 G 69/20

(30) Priority: 27.01.83 US 461344

(43) Date of publication of application: 05.09.84 Bulletin 84/36

(84) Designated Contracting States: DE FR GB IT NL

(71) Applicant: **The B.F. GOODRICH Company,**
**Dept. 0015 WHB-6 500 South Main Street, Akron, Ohio 44318 (US)**

(72) Inventor: **Yang, Wei-Yeih Wayne, 14339 Lisa Drive, Maple Heights Ohio 44137 (US)**

(74) Representative: **von Kreisler, Alek, Dipl.-Chem. et al, Deichmannhaus am Hauptbahnhof, D-5000 Köln 1 (DE)**

(54) **RIM process using single component composition.**

(57) This invention relates to reaction injection molding of a lactam composition containing a catalyst and a promoter agent that is a combination of a first promoter that imparts a short pot life and a short mold time and a second promoter that imparts a long pot life and a long mold time or a catalyst quencher, which attenuate the action of the first promoter in order to provide a molding composition having a long pot life and a short mold time. The use of the promoter agent does away with the need to mix a separate monomer stream containing catalyst with another monomer stream containing promoter and, therefore, does not require high speed impinging mixing heads which limit the type of additives, especially fillers, that can be admixed.

RIM PROCESS USING SINGLE COMPONENT COMPOSITION

## BACKGROUND OF THE INVENTION

Reaction injection molding (RIM) is a low pressure one-step or one-shot injection of liquid components into a closed mold where rapid polymerization occurs resulting in a molded plastic product. In a RIM process, viscosity of the materials fed to a mold is about 50 to 10,000 cps, preferably about 1500 cps, at injection temperatures varying from room temperature for urethanes to about 150°C for lactams. Mold temperatures in a RIM process are in the range of about 100 to 200°C and pressures in the mold are generally in the range of about 50 to 150 psi. At least one component in the RIM formulation is a monomer that is polymerized to a polymer in the mold. In RIM, a chemical reaction takes place in the mold to transform a monomer to a polymeric state. For practical purposes, the chemical reaction must take place rapidly in less than about 2 minutes for smaller items.

A companion patent application of the inventor W. Yang entitled "Nylon Compositions And RIM Process For Making Same," bearing S.N. 340,179 and filed January 18, 1982, relates to relevant subject matter. The invention in that application relates to mixing a first component containing a lactam, promoter and an epoxy material with a second component containing a lactam and a catalyst, and introducing the mixture into a preheated mold where it solidifies on polymerization.

The Hedrick U.S. patents 3,944,629, 4,031,164 and 4,034,015 disclose terpolymers of a lactam, polyol, and polyacyl lactam containing both ester and amide linkages between the monomeric segments. These terpolymers can be prepared by reacting together a lactam, polyol and polyacyl lactam in the presence of a basic lactam polymerization catalyst.

Although urethanes are the only commercial materials currently available for RIM processing, systems based on the use of nylons are being developed due to serious disadvantages of the urethane systems. A significant advantage of the nylon systems over the urethanes resides in the fact that in the latter, there is a need for a strict control of the mixing ratio of the reactive materials.

Polymerization of a lactam to give a polyamide has been known for many years. The earliest processes for this polymerization were slow, requiring several hours, and involved the use of water or acidic reagents as polymerization catalysts. Subsequent work showed that anhydrous lactams could be polymerized at about 200°C in the presence of strongly basic materials, particularly the alkali and alkaline earth metals, their hydrides, hydroxides, alkoxides, oxides, alkyls or amides. More recently, it has been disclosed that the base-catalyzed polymerization of a lactam can be accelerated by the addition of certain compounds that function as promoters. Particularly effective promoters which have been disclosed include acylating agents such as acyl halides, anhydrides and the like; isocyanates and compounds containing tertiary nitrogen having at least two of the three substituents on the nitrogen atom consisting of carbonyl, thiocarbonyl, sulfonyl, phosphenyl, thio- phosphenyl and nitroso radicals.

Carrying out the RIM process normally involves the metering into a mixing head of one monomer stream containing the catalyst and metering into the mixing head of another monomer stream containing the promoter. The two streams are mixed in the mixing head and then conveyed into a preheated mold where polymerization takes place and where the monomer mixture is converted into a solid object. Such a process, therefore, requires critical metering of two reactive streams and the use of high speed impinging mixing heads which limit the type of fillers that can be admixed in the molding compositions.

## SUMMARY OF THE INVENTION

This invention relates to a process for reaction injection molding of a single composition having a long pot life at a lower temperature and a short mold time at a higher temperature, said composition containing both a catalyst agent and a promoter agent in a lactam monomer. The catalyst agent is an ionic polymerization catalyst and the promoter agent is a combination of a first more active promoter and a second less active promoter or a catalyst quencher. The first promoter imparts to molding compositions a short pot life and a short mold time whereas the second promoter imparts a long pot life and a long mold time. A catalyst quencher prolongs pot life at lower temperature without inhibiting polymerization at elevated temperature. In a preferred embodiment, the first promoter is selected from acyl lactams, the second is selected from lactam-blocked isocyanates, and the catalyst quencher is selected from aromatic amides.

## DETAILED DESCRIPTION OF THE INVENTION

By using a proper promoter agent, a single monomer formulation containing both the catalyst agent and the promoter agent can be reaction injection molded without the need for critical metering of two separate monomer streams or the impinging mixing head which drastically restricts the type of fillers and other ingredients that can be admixed with the monomer formulation. Furthermore, the monomer formulation containing the combination of promoters has a long pot life at mixing temperature and a short mold time at elevated temperature.

The promoters of the first type are known promoters in lactam ring opening polymerization and are known for imparting a short pot life and a short mold time to the monomer compositions. It should be self-evident that these promoters are very active. The second type are also known promoters in ring opening polymerization of lactams but they are recognized for imparting long pot life and long mold time to the monomer compositions.

Although the first type of promoters are known for yielding molding compositions with short pot lives and short mold times, and although the second type are known promoters which are known for giving molding compositions having long pot lives and long mold times, the combination of the two yielding long pot lives and short mold times is unexpected. What would be expected, however, based on the catalyst art, is that the dominant promoters, i.e., promoters of the first type, would control the rate of polymerization to the exclusion of the less active promoters, i.e., promoters of the second type. This means that the promoter

combination described herein would be expected to give molding compositions with short pot lives and short mold times whereas the desired objective is a long pot life and a short mold time.

Contrary to what was expected, the invention described herein has shown that a combination of a first promoter with a second promoter or a catalyst quencher yields a molding composition that has the desired long pot life and the desired short mold time. It appears entirely fortuitous that the promoter combination in a lactam monomer results in a molding composition that selectively possesses the desirable attributes of a long pot life and a short mold time since the use of the promoter combination could have yielded a molding composition that retains the negative attributes of the two types of promoters, i.e., a short pot life and a long mold time.

Generally speaking, promoters of the first and second types are those that can be used in the anhydrous polymerization of lactams. Such promoters are defined as follows:

```
A-N-B
  |
  R
```

where N is a tertiary nitrogen atom, i.e., devoid of any hydrogen atom attached thereto; A is an acyl radical selected from

```
 O     S
 ‖     ‖               |
-C,   -C,    or    O=S=O
```

B is an acyl radical selected from

```
 O     S                      O
 ‖     ‖                      ‖
-C,   -C,    O=S=O,    or     N
```

and R can be of the same or of general type as A or B, or a hydrocarbon radical such as aryl, alkyl, aralkyl, alkaryl, cycloalkyl, etc., or a heterocyclic radical such as pyridyl, quinolyl, etc., or any of the aforementioned groups substituted with or containing additional radicals or groups such as carbonyl, N-substituted carbonyl, alkoxy, ether, sulfonyl, tertiary amino, etc., or any other non-interfering group which will not preferentially react with the lactam or which will not otherwise affect activity of the catalyst. At least two acyl groups must be attached to the tertiary nitrogen atom in order to activate at least one of the nitrogen-acyl group bonds sufficiently to break under the prevailing polymerization conditions. Radicals A and B can be attached together to form a ring system. Likewise, radical A and the tertiary nitrogen atom can constitute a part of a ring system not including radical B.

A preferred class of promoters having the aforesaid structure are the N-substituted imides that have at least two acyl groups attached directly to the tertiary nitrogen atom such as bis-acyllactams, N-substituted imides comprising cyclic imides of dicarboxylic acids, and N-substituted imides that have a multiplicity of the essential N,N-diacyl tertiary nitrogen atom groups. Another class of promoters are the N-acyl sulfonamides that are devoid of hydrogen atoms on the sulfonamide nitrogen atom, as well as disulfonamides, N-nitroso-amides, and N-nitroso-sulfonamides.

Specific examples of the promoters generally defined in the preceding paragraphs include terephthaloyl biscaprolactam, caprolactam

capped methylene diisocyanate, N-acetyl-2-pyrrolidone, N-acetyl-epsilon caprolactam, N-benzoyl-epsilon caprolactam, N-propionyl-W-caprylolactam, N-phenylsuccinimide, N-benzoylphthalimide, N,N',N"-trimethylester of isocyanuric acid, ethylene disuccinimide, N,N-diacetylmethylamine, N-acetyl-N-ethyl-p-toluenesulfonamide, N-methylsaccharin, N,N-di(p-toluenesulfonyl)aniline, N-nitroso-2-pyrrolidone, N-nitrososuccinimide, N,N-diacetylnitrosamine, and N-nitroso-N-methylbenzenesulfonamide. U.S. patent 3,017,391 to Mottus, et al. discloses the above-mentioned promoters in greater detail.

The preferred promoters of the first type, which yield molding compositions having short pot life and short mold time, are the acyl lactam types. These promoters include compounds which are devoid of an amido hydrogen and which are characterized by a tertiary nitrogen having at least two of the three substituents thereon which are carbonyl. Such promoters are defined as follows, and include bis compounds thereof:

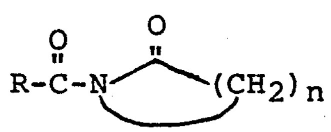

where n is 3 to 14, preferably 5 to 11, and R is selected from aryl groups such as anthracyl, naphthyl and phenyl, preferably phenyl; and alkyl groups containing 1 to 30 carbon atoms, preferably 1 to 12. Specific example of such a promoter is terephthaloyl bis-acyl caprolactam.

The promoters of the second type, which impart long pot lives and long mold times, are selected from lactam-blocked aromatic isocyanates. These promoters are characterized by having an

amido hydrogen connected to a secondary nitrogen which in turn, is connected to an aromatic moiety. The lactam-blocked isocyanates are known promoters. The lactam-blocked isocyanates are defined as follows, and include bis compounds thereof:

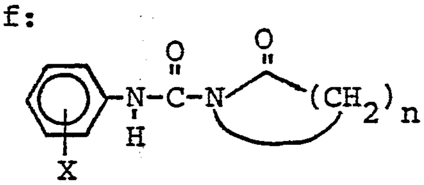

where n is 3 to 14, preferably 5 to 11; and X is selected from hydrogen, halogens, NO-$_2$ group, and C≡N-group. All of the positions on the phenyl group can be substituted with X. Specific example of such a compound is caprolactam capped diphenylmethane diisocyanate.

The aromatic amides, which function as catalyst quenchers, are defined as follows, and include bis compounds thereof:

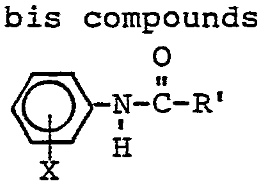

where n is 3 to 14, preferably 5 to 11; X is selected from hydrogen, halogens, $NO_2$-, and C≡N-groups; and R' is selected from aromatics such as naphthyl and phenyl groups, and alkyl groups of 1 to 30, preferably 1 to 12 carbon atoms.

Promoter of the second type also functions as a catalyst quencher to reduce activity thereof in order to obtain desirable attributes of a long pot life and a short mold time. Catalyst quencher is a material that reacts with a catalyst to form a less reactive specie which has a reduced activity at mixing temperature, but at a higher temperature it triggers the regeneration of more active catalytic forms. This function of the catalyst

quencher, when properly selected, permits the extension of pot life at a mixing temperature but a reduced mold time at a higher temperature.

The promoter agent includes promoter of the first type and a promoter of the second type or a catalyst quencher. The promoter agent is used in an amount of a fraction of one percent, such as 0.1 mol precent, and up to about 10 mol percent, but preferably about 1 mol percent. The ratio of promoter of the second type or catalyst quencher to promoter of the first type can be varied to suit requirements of a particular situation, however, generally, this ratio will vary from about 0.01 to 5, preferably from about 0.25 to 1.5. As is evident from the data in Table I, this relationship is not linear and is to be used as a general guideline.

As already noted, promoters of the first type impart a short pot life and a short mold time to molding compositions containing a lactam monomer or a mixture of such monomers whereas promoters of the second type impart long pot lives and long mold times. In the context of the first type of promoter, a short pot life generally means a time period at 80°C of up to about 5 minutes, generally up to about one quarter of one hour, whereas a short mold time generally means less than about 2 minutes, more likely less than about 1 minute, at 155°C. Furthermore, in the context of the second type of promoter, a long pot life generally means a time period of about one-half hour or more, generally about one hour or more at 80°C, whereas a long mold time generally means a time period of more than about 10 minutes, more likely about 5 minutes or more at 155°C. On the

basis of these considerations, therefore, the desired pot life for a molding composition is longer than about 1/2 hour, preferably at least 1 hour at 80°C, whereas the desired mold time is less than about 5 minutes, preferably less than 2 minutes at 155°C.

The monomer that is polymerized pursuant to the invention herein can be all lactam or mixtures of lactams or lactams with other copolymerizable monomers or polymers. Examples of such copolymerizable monomers and polymers include epoxy monomers and resins, polyols, and other materials which do not inhibit lactam polymerization. Specific examples of suitable copolymerizable monomers and polymers include vinyl cyclohexane dioxide, epoxidized polyolefins, glycidyl ether resins such as diglycidyl ether of bisphenol A, epoxy novolac resins, etc. The monomer compositions suitable for polymerizing pursuant to the invention described herein include at least about 50% and up to 100% of a lactam or a mixture thereof, whereas the copolymerizable component can be present up to about 50% by weight. In a preferred embodiment, amount of a lactam can be about 80% to 95% with the copolymerizable component being the remaining 20 to 5%, and more preferably, the monomer charge is 100% lactam or a mixture of lactams.

The lactams suitable for polymerization pursuant to the invention described herein are defined as follows:

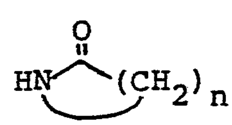

where n is 3 to 14, preferably 5 to 11. Also

included herein are substituted lactams containing substituents such as alkyl and alkoxy groups of 1 to 6, preferably 1 to 2 carbon atoms. Although the preferred lactam is epsilon-caprolactam that yields nylon-6 on polymerization, examples of other suitable lactams include pyrrolidone, piperidone, valerolactam, lauryllactam, 5-methylcaprolactam, and the like. In addition to lactams that are unsubstituted on their carbon chains, also included within the scope of this invention are lactams with substituents on the carbon chains that do not inhibit or otherwise adversely affect the polymerization reaction.

The anionic polymerization catalyst is used in an amount of a fraction of one percent, such as 0.1 and up to about 10 mole percent, preferably about 1 mole percent. The catalyst can be selected from the class of compounds commonly recognized as suitable basic catalysts for the anhydrous polymerization of lactams, especially the Grignard reagents. In general, all alkali or alkaline earth metals are effective catalysts either in the metallic form or in the form of hydrides, halohydrides, alkylhalides, oxides, hydroxides, carbonates and the like. Especially useful are organometallic compounds of the metals mentioned above such as metal alkyls, metal phenyls, metal amides and the like. Specific examples include sodium hydride, potassium hydroxide, lithium oxide, ethyl magnesium bromide, phenyl magnesium bromide, calcium fluorohydride, strontium carbonate, barium hydroxide, methyl sodium, butyl lithium, potassium phenyl, diphenyl barium, sodium amide and magnesium diethyl. All of the foregoing compounds react with the lactam

monomer to form the metal lactam, which is the active catalytic agent in the lactam polymerization mechanism. The metal lactam catalyst can, therefore, be formed in situ by reaction of one of the foregoing metal or metal compounds with lactam monomer in the polymerization medium or by prior reaction of the metal or metal compound.

It should be understood that other materials can be added to the composition to improve properties thereof. Examples of such materials include fillers, pigments, stabilizers, and the like.

The reaction injection molding process for making solid objects involves mixing the lactam monomer with a catalyst, the promoter combination, and any other desirable ingredients. The lactam used may have to be heated above its melting temperature to render it liquid. The melting point of caprolactam, for instance, is about 70°C. Generally speaking, the monomer formulation will be maintained at a temperature of about 70 to 100°C to ensure that it remains in the liquid state.

The mold is generally maintained at about 100 to 200°C, preferably at about 120 to 160°C. When the monomer formulation is conveyed into the preheated mold, the polymeriation system is thermally activated and polymerization proceeds very quickly to the point where a solid object is obtained in less than 2 minutes, preferably in less than 1 minute. After curing, a solid, molded object is removed. In the mold, polymerization of the lactam takes place and the system changes from a liquid to a gel and then undergoes a color change from clear to opaque, indicating solidification. Viscosity of the liquid mixture before injecting it

into the mold is generally in the range of about 50 to 20,000 cps, preferably about 1500 cps, measured at 70°C.

The following examples will serve to further illustrate the practice of the present invention and the benefits derived therefrom.

## EXAMPLES

Many samples were prepared by mixing caprolactam with a catalyst and a promoter agent that included a first promoter and a second promoter. The catalyst was made by reacting 100 grams of molten caprolactam with 10 mls of a 3 molar solution of phenylmagnesium bromide in diethyl ether that was kept under nitrogen at 118 to 120°C. The first promoter was terephthaloyl bis-acyl caprolactam (TBC) and the second promoter was caprolactam capped diphenylmethane diisocyanate (CMDI). The samples were mixed at about 80°C and then polymerization rate was determined at 80°C and 155°C. The rate at the lower temperature generally corresponds to the pot life and the rate at the higher temperature generally corresponds to the mold time. The time necessary to achieve essentially complete polymerization, i.e., polymerization rate, was measured from the point when mixing was completed to the point when the mixture no longer showed any flow. The results are tabulated in Table I, below, where amounts given are on a mol basis:

TABLE I

| | 1 | 2 | 3 | 4 | 5 | 6 | 7 | 8 | 9 | 10 |
|---|---|---|---|---|---|---|---|---|---|---|
| Caprolactam | 0.159 | 0.159 | 0.159 | 0.159 | 0.159 | 0.159 | 0.159 | 0.159 | 0.159 | 0.159 |
| CMDI ($10^{-3}$m) | 5.02 | 4.14 | 4.14 | 3.34 | 2.01 | 3.35 | 1.67 | 1.67 | 0.84 | 0 |
| TBC ($10^{-3}$m) | 1.71 | 2.16 | 2.80 | 2.52 | 2.16 | 4.20 | 2.52 | 3.36 | 3.36 | 4.20 |
| CMDI/TBC, m/m | 2.94 | 1.92 | 1.48 | 1.33 | 0.93 | 0.80 | 0.66 | 0.50 | 0.25 | 0 |
| Catalyst, ml | 6.56 | → | → | → | → | → | → | → | → | → |
| Polymer. rate @ 80°C | - | 130' | 57' | 84' | 40' | 35' | 22' | 23' | 10' | 4 1/2' |
| " @ 155°C | 5'48" | 3' | 1 1/2' | 2'50" | 1'25" | 1'20" | 1'16" | 1'10' | 1/2' | <1/2' |

In the above table, samples #1 to #10 show various ratios of the second promoter to the first promoter, with sample #10 being control since it contained only the first promoter. Sample #10 contained $4.20 \times 10^{-3}$mol of the first promoter but no second promoter and showed a very rapid polymerization rate of 4 1/2 minutes at 80°C and less than 1/2 minute at 155°C. The rate of less than 1/2 minute at 155°C, which corresponds to the mold time, is very desirable because it is so short, however, the rate of 4 1/2 minutes at 80°C, which corresponds to the pot life, is totally inadequate since it is not long enough in a conventional molding operation to allow for handling such mixtures. It is estimated that a control sample containing only the second promoter at a level of $4.0 \times 10^{-3}$ mol in 0.159 mol of caprolactam yields a polymerization rate of greater than 6 hours at 80°C and about 8 minutes at 155°C.

Polymerization rate at 80°C, which can correspond to the pot life of a molding composition, should be at least about one-half hour, preferably on the order of 1 to 2 hours. Polymerization rate at 155°C, which can correspond to the mold time of a molding composition, should be not more than about 5 minutes, preferably less than about 3 minutes, and more preferably less than 2 minutes.

The results in the above table confirm allegations made herein with respect to the ability of the second promoter to attenuate the catalytic effectiveness of the very active first promoter. For instance, at CMDI/TBC ratio of 1.48, sample #3 required 57 minutes to polymerize at 80°C but

only 1 1/2 minutes at 155°C, which rates are very satisfactory for conventional molding operations. It should be apparent that the pot life can be further increased by using a lactam that has a lower melting point. This would permit mixing at a lower temperature and would also substantially prolong the pot life without substantially sacrificing the mold time.

CLAIMS

1. A process comprising the steps of preparing a mixture by mixing a material comprising a lactam, a lactam polymerization catalyst, and a promoter agent that includes a first promoter that alone provides short pot life and short mold time and a second promoter that alone provides long pot life and long mold time or a catalyst quencher, the promoter agent imparting a long pot life to said mixture at mixing temperature; introducing said mixture into a mold maintained at an elevated temperature at which polymerization of said lactam is carried out quickly to give a short mold time; and extracting a molded object from the mold.

2. Process of claim 1 including the step of melting said lactam and carrying said mixing step at a temperature at which the lactam is in a liquid state, said first promoter is devoid of an amido hydrogen and is characterized by the presence of a tertiary nitrogen whereas said second promoter contains an amido hydrogen and is characterized by the presence of a secondary nitrogen connected to an aromatic moiety.

3. Process of claim 2 wherein said first promoter is defined by the following formula I, and includes bis compounds thereof:

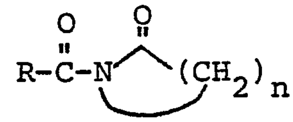

I

where n is 3 to 14; and R is selected from aromatic groups and alkyl groups of 1 to 30 carbon atoms; said second promoter is defined by the following formula II; and said catalyst quencher is defined by the following formula III, said compounds of

formulas II and III also include bis compounds thereof:

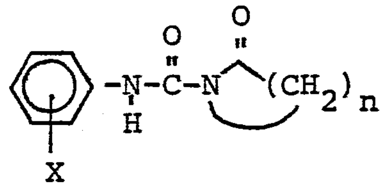 II 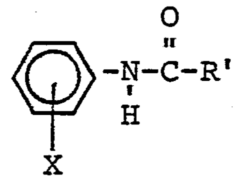 III

where n is 3 to 14; X is selected from hydrogen, halogens, $NO_2$-, and C≡N-; and R' is selected from aromatic groups and alkyl groups of 1 to 30 carbon atoms.

4. Process of claim 3 wherein n is 5 to 11 in formulas I and II; R is phenyl or an alkyl group of 1 to 12 carbon atoms; X in formulas II and III is selected from hydrogen, chlorine, and bromine; and R' is phenyl or an alkyl group of 1 to 12 carbon atoms; the mol ratio of said second promoter or catalyst quencher to said first promoter is 0.01 to 5; said mixture is prepared in a mixing tank and conveyed to the mold without the need for any intermediate mixing means; said mixture having a polymerization rate of at least one-half hour at 80°C and less than 5 minutes at 155°C.

5. Process of claim 4 wherein said second promoter is selected from compounds defined by formula II, above, and bis compounds thereof; wherein the mol ratio of said second promoter to said first promoter is about 0.25 to 1.5; and wherein amount of each of said catalyst and said promoter agent is 0.1 to 10 mol percent, based on said lactam which is defined as follows:

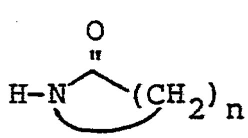

where n is 3 to 14.

6. Process of claim 5 wherein said catalyst is a basic catalyst for anhydrous polymerization of lactams; said first promoter is terephthaloyl bis-acyl caprolactam and said second promoter is lactam capped diphenylmethane diisocyanate.

7. Process of claim 6 wherein said lactam monomer to be polymerized is selected from lactams where n is 5 to 11, said mixture having polymerization rate of at least about one-half hour at 80°C and a rate of not more than about 5 minutes at 155°C.

8. Process of claim 4 wherein said catalyst quencher is selected from compounds defined by formula III, above, and bis compounds thereof; the mol ratio of said catalyst quencher to said first promoter is 0.25 to 1.5; and amount of each of said catalyst and said promoter agent is 0.1 to 10 mol percent, based on said lactam which is defined as follows:

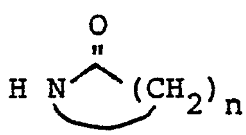

where n is 3 to 14.

9. Process of claim 8 wherein said catalyst is a basic catalyst for anhydrous polymerization of lactams; said first promoter is terephthaloyl bis-acyl caprolactam.

10. Process of claim 4 wherein said mixture has a polymerization rate at 80°C of at least 1 hour and a rate at 155°C of less than 2 minutes.

European Patent Office

# EUROPEAN SEARCH REPORT

0117433
Application number

EP 84 10 0771

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DD-A- 128 751 (VEB LEUNA-WERKE "W. ULBRICHT") * Claim; page 3, line 2 - page 6, line 19 * | 1-5,7, 10 | C 08 G 69/20 |
| | --- | | |
| A | US-A-3 304 291 (K. DACHS et al.) * Column 2,lines 10-67; claim 1 * | 1-3 | |
| | --- | | |
| A | GB-A-1 098 938 (CHEMISCHE WERKE HÜLS AG) * Page 2, lines 4-22; lines 68-74; claims 1, 14, 15 * | 1-3 | |
| | --- | | |
| A | AT-B- 264 133 (FARBENFABRIKEN BAYER AG) * Claims 1, 4 * | 1,3 | TECHNICAL FIELDS SEARCHED (Int. Cl. 3) |
| | --- | | |
| A | CH-A- 414 160 (MONSANTO CHEMICAL CO.) * Claim; subclaims 1, 2, 4, 6 * | 1-3 | C 08 G 69/00 |
| | --- | | |
| A | DE-A-1 495 219 (BRITISH CELANESE LTD.) * Claims 1, 4 * | 1,3,6, 9 | |
| | --- | | |
| A | GB-A-1 241 341 (ICI LTD.) * Page 2, lines 29-43 * | 1-3 | |
| | ----- | | |

The present search report has been drawn up for all claims

| Place of search | Date of completion of the search | Examiner |
|---|---|---|
| BERLIN | 18-04-1984 | IDEZ C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82